# FASCICULE DE BREVET EUROPEEN

(11) **EP 3 706 000 B1**
(45) Date de publication et mention de la délivrance du brevet: **27.10.2021**
(21) Numéro de dépôt: 20161369.2
(22) Date de dépôt: 06.03.2020
(51) Int. Cl.: G06F 11/16

(54) **PROCEDE ET SYSTEME POUR UNE REDONDANCE A CHAUD GEOGRAPHIQUE**
VERFAHREN UND SYSTEM FÜR EINE GEOGRAFISCHE HEISSE REDUNDANZ
METHOD AND SYSTEM FOR GEOGRAPHICAL HOT REDUNDANCY

(30) Priorité: 07.03.2019 FR 1902344
(43) Date de publication de la demande: 09.09.2020
(73) Titulaire: ALSTOM Transport Technologies, 93400 Saint-Ouen-sur Seine (FR); Institut de Recherche Technologique Systemx, 91120 Palaiseau (FR)
(72) Inventeur: BEZZECCHI, Sergio, 91140 VILLEBON SUR YVETTE (FR)
(74) Mandataire: Lavoix

(56) Documents cités:
- EP-A1- 1 764 694
- DE-A1- 4 415 761
- FR-A1- 3 046 861
- FR-A1- 3 047 862

## Description

La présente invention concerne les procédés et les systèmes pour une redondance à chaud.

Pour fournir une certaine fonctionnalité, un système informatique comporte un calculateur de sécurité exécutant, de manière cyclique, une application adaptée.

Un calculateur de sécurité est un calculateur intrinsèquement sûr. Il est par exemple fondé sur une architecture 2oo2 (« two out of two »), qui comporte deux unités de calcul, de préférence diversifiées l'une par rapport à l'autre. Ces deux unités sont disposées en parallèle l'une de l'autre de manière à recevoir, à chaque instant, les mêmes entrées. Les sorties des deux unités de calcul sont acheminées vers une unité d'évaluation (ou voteur), matérielle ou logicielle, qui délivre une sortie uniquement si les sorties des deux unités de calcul sont identiques entre elles. A défaut, une sortie sécuritaire restrictive est générée par l'unité d'évaluation. De cette manière, les sorties d'un calculateur de sécurité sont garanties avec un certain niveau de confiance.

D'autres architectures sont connues de l'homme du métier, mais on constate que les architectures en mesure de satisfaire les exigences de sécurité et de disponibilité spécifiques au domaine ferroviaire reposent sur les architectures classiques 2oo2, 2oo3 ou monoprocesseur codé. On notera que l'avantage des architectures composites 2oo2 ou 2oo3 réside dans la possibilité de mettre en œuvre des composants informatiques classiques (COTS pour « Composant Of The Shelf »).

L'augmentation du taux global de disponibilité de la fonctionnalité offerte par le système informatique est obtenue par l'agrégation de moyens de calcul fonctionnant en parallèle, de sorte qu'un moyen puisse immédiatement prendre la relève d'un autre moyen défaillant.

Une telle redondance, dite redondance à chaud, des moyens de calcul est par exemple présentée dans le document EP 1 764 694 B1, qui divulgue un système comportant un premier calculateur de sécurité maître et un second calculateur de sécurité esclave, dupliquant le premier calculateur de sécurité maître. Chaque calculateur exécute une réplique d'une même application. Les sorties générées à chaque cycle d'exécution de l'application par les deux calculateurs de sécurité sont comparées afin de vérifier la cohérence des deux calculateurs et le fonctionnement nominal du système. Cette vérification de la consistance dans l'exécution de chacune des répliques de l'application s'appuie sur la présence d'un dispositif matériel de commande, d'une liaison bidirectionnelle de synchronisation entres les calculateurs pour une synchronisation stricte des calculateurs maître et esclave, et d'un dispositif matériel pour traiter les sorties des deux calculateurs.

La parfaite synchronisation des deux calculateurs de sécurité est nécessaire pour être certain que la comparaison des données de sortie générées par chaque calculateur porte sur des données calculées au cours d'un même cycle d'exécution de l'application, à partir du même lot de données d'entrée.

Ainsi, le système présenté dans le document EP 1 764 694 B1 comporte des moyens de synchronisation et de communication à travers la liaison bidirectionnelle de synchronisation entre les deux calculateurs de sécurité permettant à ces derniers de rester strictement synchronisés.

Pour ne pas introduire de distorsion, cette liaison doit être performante et dédiée. Il s'agit typiquement d'une ligne câblée, d'un bus de données ou d'un réseau de communication privé. Ces contraintes imposent que la longueur de cette liaison de synchronisation soit courte, ce qui implique que les deux calculateurs de sécurité, maître et esclave, soient placés à proximité immédiate l'un de l'autre.

A cause de la présence de cette liaison de synchronisation et occasionnellement du dispositif d'évaluation de cohérence/ d'arbitrage, les deux calculateurs de sécurité sont donc situés au même endroit géographique.

Cependant, un tel système ne permet pas de palier aux défaillances de mode commun. Par exemple, un incendie dans le local où se trouve le premier calculateur de sécurité, s'il conduit à la mise hors service de ce premier calculateur, risque également de conduire à la mise hors service du second calculateur. Ce dernier ne peut alors jouer son rôle en redondant le calculateur maître défaillant et la fonctionnalité offerte par le système informatique n'est plus disponible.

On connaît également, par le document FR 3 046 861 A1, un procédé de synchronisation pour la redondance à chaud entre une première unité et une seconde unité, la première unité comportant un premier module de synchronisation et la seconde unité comportant un second module de synchronisation, les premier et second modules de synchronisation étant en communication l'un avec l'autre, la première unité exécutant cycliquement une première réplique d'une application et la seconde unité, redondant la première unité, exécutant cycliquement une seconde réplique de ladite application, le procédé étant caractérisé par les étapes consistant en, en fonctionnement normal alors que la première unité fonctionne en tant qu'unité maître et que la seconde unité fonctionne en tant qu'unité esclave :
a) la transmission par la première unité vers la seconde unité d'un message comportant tout ou partie d'un premier contexte d'exécution de l'application pour le n^{ième} cycle ;
b) l'exécution, au cours du nième cycle, de la première réplique de l'application sur la première unité et mise à jour du premier contexte d'exécution de l'application à la fin du n^{ième} cycle ;
d) la réception par la seconde unité du message et la récupération de tout ou partie du premier contexte d'exécution du n^{ième} cycle contenu dans le message en tant que second contexte d'exécution pour le n^{ième} cycle sur la seconde unité ;
e) l'exécution, au cours du n^{ième} cycle, de la seconde réplique de l'application sur la seconde unité dans le second contexte d'exécution pour le n^{ième} cycle, sur des secondes données d'entrée du n^{ième} cycle, et mise à jour du second contexte d'exécution à la fin du n^{ième} cycle.

Il y a donc un besoin pour une redondance à chaud géographique autorisant l'éloignement physique des calculateurs redondés pour éviter les modes communs de défaillance. De la sorte, en cas de défaillance du premier calculateur maître, le second calculateur esclave n'est a priori pas affecté et, constatant que le premier calculateur est défaillant, peut prendre la main et assurer la continuité de la disponibilité de la fonctionnalité du système.

Cependant, en séparant les deux calculateurs de sécurité, on perd la possibilité de les synchroniser précisément et, par conséquent, de comparer leurs sorties pour déterminer si l'un ou l'autre des calculateurs de sécurité connait une défaillance. Il ne devient donc plus possible d'arbitrer entre celui des calculateurs qui doit fonctionner en maître et celui qui doit fonctionner en esclave.

L'invention a pour but de répondre à ce problème, en proposant un procédé pour une redondance à chaud géographique.

Pour cela l'invention a pour objet un procédé et un système pour une redondance à chaud géographique entre un premier calculateur de sécurité et un second calculateur de sécurité connectés l'un à l'autre par un réseau de communication générique conformément aux revendications annexées.

L'invention et ses avantages seront mieux compris à la lecture de la description détaillée qui va suivre d'un mode de réalisation particulier, donnée uniquement à titre d'exemple non limitatif, cette description étant faite en se référant aux dessins annexés sur lesquels :
-- la figure 1 est une représentation schématique d'un mode de réalisation d'un système informatique présentant une redondance à chaud géographique ;
-- la figure 2 est une représentation sous forme de blocs de la partie exécutée par un calculateur maître, d'un mode de réalisation du procédé pour une redondance à chaud géographique dans le système de la figure 1 ;
--- la figure 3 est une représentation sous forme de blocs de la partie exécutée par un calculateur esclave, d'un mode de réalisation du procédé pour une redondance à chaud géographique dans le système de la figure 1 ;
-- la figure 4 est une représentation sous forme de blocs d'une phase d'éducation d'un calculateur avant de rétablir la redondance; et,
-- la figure 5 est une représentation sous forme de blocs de conditions supplémentaires à vérifier avant un basculement esclave-maitre d'un calculateur.

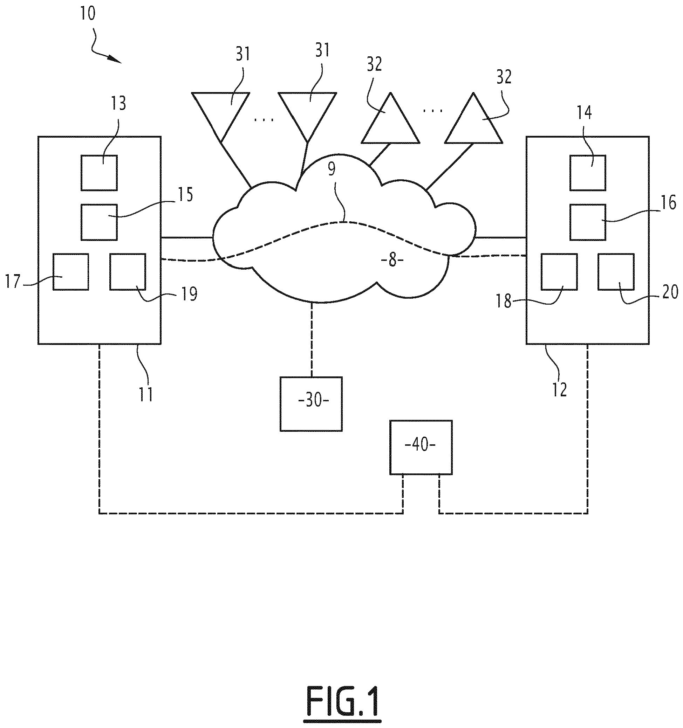

Sur la figure 1, le système 10 est construit autour d'un réseau 8 de communication générique étendu. Il s'agit par exemple d'un réseau du type WAN (« Wide Area Network » en anglais) supportant un protocole de commutation de paquets, par exemple fondé sur le protocole de communication ETHERNET.

De préférence, le réseau 8 est dupliqué pour augmenter la robustesse du système 10, chaque équipement informatique possédant alors deux ports d'entrée/sortie, chaque port étant connecté à l'un des réseaux. Pour des raisons de clarté, dans ce qui suit, le système sera considéré comme ayant un seul réseau de communication.

Le système 10 comporte un premier calculateur de sécurité 11 connecté au réseau 8. Le calculateur 11 est conforme au calculateur de sécurité présenté en introduction de la présente demande de brevet. Le premier calculateur 11 exécute une première réplique 13 d'une application qui, lorsqu'elle est exécutée, offre une fonctionnalité, par exemple une fonctionnalité de gestion d'une pluralité d'équipements de signalisation disposés le long d'une voie ferrée.

De manière générale, l'exécution d'une application s'effectue au cours de cycles successifs, chaque cycle comportant une étape d'exécution de l'application, qui consiste à exécuter un ou plusieurs processus élémentaires de cette application.

Par exemple, au cours d'une étape d'exécution, le processeur du calculateur exécute au moins un premier processus pendant un certain temps alloué. Le processeur passe ensuite à l'exécution d'une autre application. Puis, pour l'étape d'exécution au cours du cycle suivant, le processeur recommence l'exécution de ce premier processus.

L'exécution d'une application par un calculateur est assimilable à une machine à états. Des variables permettent de conserver l'état courant de cette machine. L'ensemble de ces variables constitue le contexte d'exécution de l'application considérée, c'est-à-dire l'endroit où se trouve, à l'instant courant, l'exécution de l'application. Le contexte est mémorisé.

Ainsi, le premier contexte 15 de la première réplique 13 de l'application est par exemple mémorisé dans un espace déterminé de la mémoire du premier calculateur 11.

Au début d'un cycle, avant d'exécuter l'application, le processeur charge dans la mémoire qui lui est associée le contexte de l'application à exécuter pour pouvoir reprendre l'exécution de cette application à partir de la situation dans laquelle elle se trouvait au cycle précédent.

Le contexte comporte différents types de variables, notamment des variables essentielles (telles que par exemple les attributs du cycle, temps de sécurité, etc.) et d'autres variables, telles que les variables d'état de l'application (qui dépendent donc de chaque application).

Si deux calculateurs exécutant des répliques d'une même application possèdent le même contexte d'exécution à la fin du cycle N, cela signifie qu'ils sont dans le même état. On parle de cohérence d'exécution.

Des premières données d'entrée 17 collectées par le premier calculateur 11 et devant être utilisées lors de l'exécution de la première réplique 13 de l'application sont stockées dans un espace mémoire dédié.

Des premières données de sortie 19 obtenues lors de l'exécution de la première réplique 13 de l'application sont stockées dans un espace mémoire dédié.

Un cycle dure par exemple 200 ms. Si chaque cycle conduit à la génération d'une donnée de sortie du type commande d'un équipement à la voie, le système 10 permet de générer environ cinq commandes par seconde.

Il est à noter que, compte tenu des temps caractéristiques des systèmes ferroviaire (par exemple du temps de réaction de l'actionnement d'un aiguillage), une commande peut être générée avec un retard d'un ou deux cycles sans que cela dégrade le niveau de sûreté de l'installation ferroviaire.

Le système 10 comporte au moins un calculateur de sécurité redondant le premier calculateur 11. Ainsi le système 10 comporte un second calculateur de sécurité 12 connecté au réseau 8. Le second calculateur 12 est matériellement identique au premier calculateur 11. Il exécute une réplique de l'application exécutée sur le premier calculateur 11. Cette réplique est une seconde réplique 14.

Un second contexte 16 de la seconde réplique 14 de l'application est mémorisé dans un espace déterminé de la mémoire du second calculateur 12.

Des secondes données d'entrée 18 collectées par le second calculateur 12 et devant être utilisées lors de l'exécution de la seconde réplique 14 de l'application sont stockées dans un espace mémoire dédié.

Des secondes données de sortie 20 obtenues lors de l'exécution de la seconde réplique 14 de l'application sont également stockées dans un espace mémoire dédié.

Le système 10 comporte également une pluralité de périphériques connectés au réseau 8.

Les périphériques comportent des périphériques 31 d'acquisition de données, propres à transmettre les données acquises vers les calculateurs de sécurité 11 et 12, par exemple par la mise en oeuvre d'un protocole de diffusion multicast sur le réseau 8.

Les périphériques comportent également des périphériques 32 d'actionnement propres à recevoir des commandes émises par les calculateurs de sécurité 11 et 12.

Eventuellement, le système 10 est interfacé avec d'autres calculateurs et systèmes, dits externes, 30, à travers le réseau 8.

A chaque instant, un seul calculateur de sécurité du système 10 fonctionne en tant que calculateur maître ayant le contrôle absolu du système : il est le seul calculateur de sécurité à produire des données de sortie et à les transmettre en tant que commandes vers les périphériques 32 d'actionnement ou les systèmes externes 30. Le ou chaque autre calculateur de sécurité fonctionne en esclave et les données de sortie qu'il calcule ne sont pas utilisées par les périphériques connectés au réseau.

Dans le mode de fonctionnement nominal du système 10, le premier calculateur 11 fonctionne en calculateur maître du système et le second calculateur 12 fonctionne en calculateur esclave.

Grâce au réseau 8, les calculateurs et les périphériques du système 10 peuvent être installés en des endroits variés.

En particulier, les premier et second calculateurs de sécurité 11 et 12 sont hébergés en des endroits distants pour éviter au maximum les défaillances de mode commun. Les premier et second calculateurs 11 et 12 peuvent ainsi par exemple être prévus à chacune des stations de terminus de la ligne de métro dont ils gèrent la signalisation.

Le premier calculateur 11 maître communique avec le second calculateur 12 esclave à travers le réseau 8. Typiquement, dans le système 10, la communication entre les premier et second calculateurs 11 et 12 (lien 9 sur la figure 1) s'effectue à travers un premier réseau local, auquel est connecté le premier calculateur 11 ; une première passerelle ; un réseau public ou privé du type WAN; une seconde passerelle ; et un second réseau local auquel est connecté le second calculateur 12.

L'utilisation d'un réseau, tel que le réseau 8, ne permet pas de garantir qu'un paquet d'entrée multicast produit par l'un des périphériques 31 d'acquisition et adressé aux calculateurs 11 et 12 soit effectivement reçu par les deux calculateurs. De même, le réseau 8, ne permet pas de garantir que deux paquets émis l'un après l'autre par le premier calculateur 11 soient reçus dans le même ordre par le second calculateur 12, ni que la durée séparant ces deux paquets lors de leur émission soit conservée au cours de leur transmission. Il peut même se faire qu'un paquet soit perdu au cours de sa transmission sur le réseau. Il n'est donc pas possible de synchroniser strictement les premier et second calculateurs 11 et 12 à travers le réseau 8, ni d'assurer qu'ils reçoivent exactement les mêmes données d'entrée.

Selon l'invention, le calculateur esclave est donc autorisé à compléter, à son rythme, l'exécution de l'application, sans être obligé à une adhésion temporelle étroite à l'exécution du calculateur maître.

Puisqu'il n'est plus possible de synchroniser étroitement les calculateurs maître et esclave, un procédé 100 pour une redondance à chaud géographique est mis en œuvre par le système 10 pour maintenir une cohérence entre les calculateurs maître et esclave.

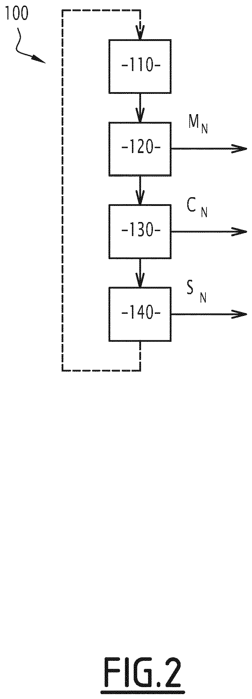

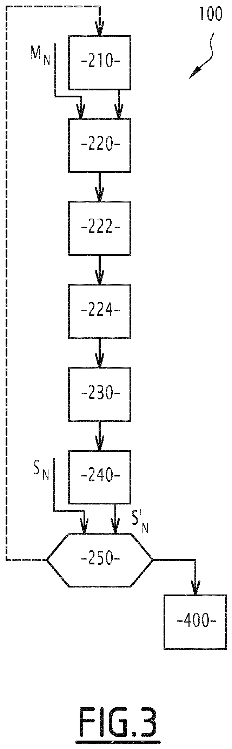

Le procédé 100 permet au calculateur maître d'entretenir la cohérence du/des calculateur(s) esclave(s) comme cela va maintenant être présenté en référence aux figures 2 et 3.

La figure 2 correspond à la partie du procédé 100 réalisée sur le premier calculateur de sécurité 11 agissant en tant que maître.

A la fin du cycle N-1, à l'étape 110 le premier calculateur 11 reçoit, des différents périphériques 31, les données d'entrée 17 qui seront à traiter au cycle N. Chaque données d'entrée acquise par le premier calculateur 11 est datée et signée afin de garantir l'intégrité et l'unicité de cette donnée d'entrée. Chaque donnée d'entrée est mémorisée dans l'espace correspondant de la mémoire du premier calculateur 11 en tant que première donnée d'entrée.

Au début du cycle N suivant, à l'étape 120, le premier calculateur 11, en lisant les espaces correspondants de sa mémoire, élabore un message initial comportant l'ensemble des premières données d'entrée 17 pour le cycle N, et une partie du premier contexte d'exécution 15 pour le cycle N.

Par exemple, un message initial indique le numéro du cycle, les valeurs des premières données d'entrée pour ce cycle, et les valeurs des variables essentielles du premier contexte d'exécution de l'application pour ce cycle.

Le message initial pour le cycle N, M_{N}, est transmis au second calculateur 12 via le réseau 8.

Avantageusement, la transmission par le premier calculateur 11 de ses données d'entrée et de la portion de son contexte s'accompagne de codes de correction permettant au second calculateur 12 de reconstituer les éventuelles trames manquantes dans le message M_{N}.

Puis, au cours de l'étape 130, le premier calculateur 11 exécute la première réplique 13 de l'application dans le premier contexte 15 pour le cycle N, sur les premières données d'entrée 17 pour le cycle N. Cela conduit à l'obtention de premières données de sortie 19 pour le cycle N.

A l'issue de l'étape 130, les valeurs des variables du premier contexte 15 sont mise à jour. Le premier contexte 15 mis à jour à la fin du cycle N sera le contexte à utiliser pour débuter l'étape d'exécution de la première réplique 13 de l'application au cycle suivant N+1.

Les premières données de sortie 19 pour le cycle N sont transmises aux périphériques 32 en tant que commandes C_{N}.

Puis, à l'étape 140, le premier calculateur 11 calcule une première signature 20 du premier contexte 15 mis à jour à la fin du cycle N. Cette première signature pour le cycle N, S_{N}, est établie sur l'ensemble des variables critiques du premier contexte 15 de l'application d'intérêt.

Le premier calculateur 11 transmet la première signature S_{N} pour le cycle N vers le second calculateur 12 via le réseau 8.

Puis, sur le premier calculateur 11, pour les cycles suivantes, les étapes 110 à 140 sont itérées.

La figure 3 correspond à la partie du procédé 100 réalisée sur le second calculateur de sécurité 12 agissant en tant qu'esclave.

Au cycle N-1, à l'étape 210, le second calculateur 12 reçoit des différents périphériques 31 les données d'entrée qui sont mémorisées en tant que secondes données d'entrée 18 pour le cycle N. Chaque donnée d'entrée acquise par le second calculateur 12 est datée et signée afin de garantir l'intégrité et l'unicité de cette donnée d'entrée.

Au cycle N, à l'étape 220, le second calculateur 12 traite le message M_{N} pour le cycle N qu'il a reçu du premier calculateur 11.

A l'étape 222, le second calculateur 12 affecte aux variables du second contexte 16 pour le cycle N, les valeurs de ces mêmes variables indiquées dans le massage M_{N}.

A l'étape 224, le second calculateur 12 procède à une réconciliation complète des secondes données d'entrée 18 pour le cycle N. Pour ce faire, le second calculateur 12 considère que les premières données d'entrée du message M_{N} constituent l'ensemble des secondes données d'entrée 18 qu'il aura à traiter au cycle N. Il s'agit donc d'un clonage par le calculateur esclave 12 des premières données d'entrée renseignées par le calculateur maître 11 dans le message M_{N}. Les données d'entrée collectées à l'étape 210 sont donc harmonisées avec les premières données d'entrée renseignées par le premier calculateur 11.

Puis, lors de l'étape d'exécution 230, le second calculateur 12 exécute la seconde réplique 14 de l'application dans le second contexte 16 pour le cycle N sur les secondes données d'entrée 18 pour le cycle N, de manière à calculer des secondes données de sortie 20 pour le cycle N.

A la fin de l'étape d'exécution 230, les valeurs des variables du second contexte 16 sont mise à jour.

A l'étape 240, le second calculateur 12 calcule une seconde signature S'_{N} du second contexte 18 mis à jour à la fin du cycle N. Le second calculateur 12 met ici en œuvre le même algorithme de signature que celui utilisé par le premier calculateur 11.

A l'étape 250, le second calculateur 12 certifie l'alignement de son contexte avec celui du premier calculateur 11 en comparant, pour le même cycle N, la seconde signature S'_{N}, qu'il a calculée, et la signature S_{N}, qu'il a reçue du premier calculateur 11.

En cas d'identité entre les deux signatures comparées, le second calculateur 12 atteste de son alignement correct vis-à-vis du calculateur 11. Les étapes 210 à 250 sont itérées pour le cycle suivant. Le système 10 reste donc dans le mode de fonctionnement nominal, le premier calculateur 11 fonctionnant en maître et le second calculateur 12 fonctionnant en esclave.

Ainsi, comme cela vient d'être présenté, le calculateur esclave atteste, de façon autonome et en sécurité, la cohérence sur le calculateur maître.

L'utilisation d'une signature à la place des valeurs des variables du contexte garantie l'indépendance fonctionnelle entre les calculateurs, la fonction de hachage de l'algorithme de signature étant choisie en fonction de l'envergure des variables critiques à signer, afin que la probabilité de collision soit négligeable par rapport au niveau d'intégrité requis par le système (niveau SIL).

En revanche, si les deux signatures comparées sont différentes, le second calculateur 12 conclut qu'il a perdu son alignement avec le premier calculateur 11 et passe à une étape 400 d'éducation.

De préférence, le procédé passe à l'étape 400, après au moins une réexécution d'un cycle d'exécution de l'application et la confirmation de la constatation d'une perte d'alignement entre les premier et second calculateurs de sécurité.

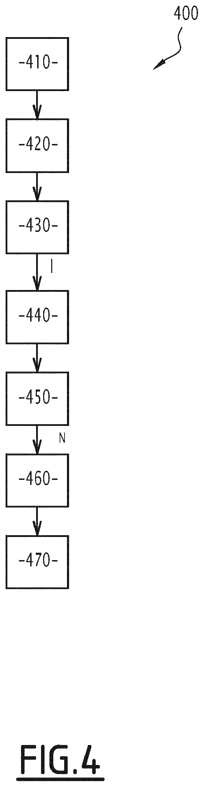

La figure 4 représente l'étape d'éducation 400 pour établir ou rétablir la cohérence d'un calculateur de sécurité.

Cette étape est mise en œuvre suite à une perte de cohérence d'un calculateur esclave vis-à-vis d'un calculateur maître détectée à l'étape 250. Elle peut également être mise en œuvre suite à une période d'isolement d'un calculateur esclave qui s'achève par exemple par le rétablissement de la communication avec un calculateur maître ou un calculateur témoin, ou encore lorsque le calculateur resté isolé à cause d'une défaillance est remis en service, ce dernier étant forcément désaligné par rapport au calculateur maître.

L'étape 400 implique une réplication intégrale du contexte du calculateur maître. Par exemple l'ensemble du contenu du premier contexte 15 à la fin du cycle N est transféré du premier calculateur 11 vers le second calculateur 12 afin de réinitialiser complétement le second contexte 12 et relancer l'exécution de la second application à partir du cycle N+1 à partir de cette réplique.

Dans une première étape 410, il est vérifié que le second calculateur 12 n'est pas affecté par une défaillance matérielle. Des diagnostics adaptés sont réalisés pour ce faire.

Dans l'affirmative, à l'étape 420, est réalisée une image I_{N} de la section de la mémoire du premier calculateur 11 qui contient le premier contexte 15 à la fin du cycle N d'exécution de l'application d'intérêt.

Puis, à l'étape 430, cette image I_{N} pour le cycle N est transmise, via le réseau 8, vers le calculateur 12.

A l'étape 440, la section de la mémoire du second calculateur 12 qui contient le second contexte 16 du calculateur 12 est initialisée à partir de l'image I_{N} reçue.

A l'étape 450, à partir du cycle N+1, l'exécution de la seconde réplique 14 de l'application est lancée dans le second contexte 16.

Une étape 460 de quarantaine permet d'observer l'évolution de la cohérence du calculateur esclave par rapport au calculateur maître sur une pluralité de cycles. Comme dans le procédé 100, le calculateur maître 11 transmet, en début de cycle N+k, les premières données d'entrée à prendre en compte ainsi que la partie pertinente du premier contexte 15 pour le cycle N+k, et, en fin de cycle N+k, une première signature sur le premier contexte en fin le cycle N+k. A la fin du cycle N+k, le calculateur esclave 12 compare une seconde signature qu'il a calculée sur le second contexte 16 en fin de cycle N+k avec la première signature reçue du calculateur maître 11 pour vérifier la cohérence entre calculateur maître et calculateur esclave.

Enfin, si l'étape de quarantaine apporte la preuve de la cohérence du calculateur esclave par rapport au calculateur maître sur plusieurs cycles, la redondance est rétablie à l'étape 470.

En variante, lorsque la taille de l'image I_{N} produite à l'étape 420 est conséquente, le temps nécessaire à sa transmission au cours de l'étape 430 depuis le calculateur maître vers le calculateur esclave peut dépasser le temps d'un cycle d'exécution, en fonction notamment de la latence et de la bande passante du réseau. Cependant, puisqu'un décalage temporel entre le calculateur maître et le calculateur esclave est admis, même si la transmission s'étale sur plusieurs cycles, une fois la transmission achevée et la mémoire du calculateur esclave réinitialisée, ce dernier reprend l'exécution de la réplique de l'application à partir du cycle N+1 et rattrape son retard lors de l'étape de quarantaine.

La capacité à pouvoir rattraper le retard d'exécution avec le calculateur maitre nécessite une certaine marge en termes de capacité de calcul de la part du calculateur esclave. Néanmoins, ce besoin de capacité de calcul supplémentaire peut être minimisé en tenant compte du fait que le calculateur esclave n'a pas à produire et à transmettre de commandes vers les périphériques.

L'étape d'éducation 400 permet donc de resynchroniser le calculateur esclave avec le calculateur maître et ainsi rétablir la redondance.

Le calculateur esclave une fois resynchronisé reste en réserve, sans obligation pour lui de reprendre le rôle de maître tant que le calculateur maître courant reste opérationnel.

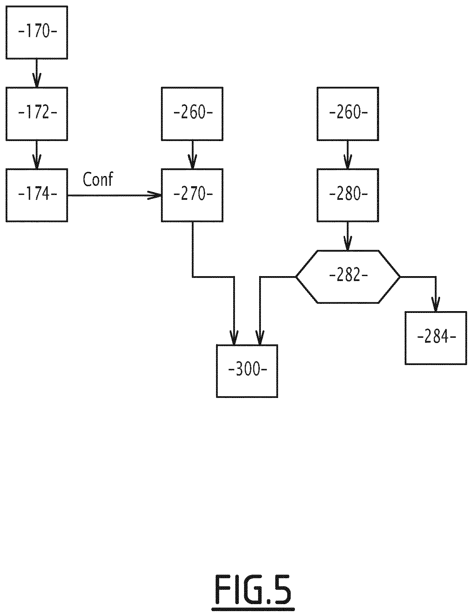

Le procédé selon l'invention prévoit la possibilité pour le calculateur esclave de basculer en tant que maître. C'est ce qui va maintenant être présenté à la figure 5.

Le procédé 100 prévoit une étape 260 selon laquelle le second calculateur 12, à chaque réception d'un message du premier calculateur 11 (message initial M_{N} ou signature S_{N}) réinitialise un compteur temporel.

Si le second calculateur 12 constate qu'à un moment où à un autre la valeur de ce compteur temporel est supérieure à une durée prédéterminée, indiquant ainsi qu'aucun message n'a été reçu du premier calculateur 11, le second calculateur 12 conclut que le premier calculateur 11 est défaillant et passe à l'étape 300 de basculement d'esclave à maître

Dans le système 10, c'est donc le calculateur esclave qui décide de prendre la main lorsqu'il ne reçoit plus de message de la part du calculateur maître pendant une durée prédéterminée.

Cependant, certaines contraintes doivent être vérifiées avant que le calculateur esclave n'initie effectivement l'étape 300 de basculement d'esclave à maître pour gagner en robustesse.

Les étapes du procédé 100 peuvent être avantageusement mises en œuvre avant d'autoriser le basculement de maître à esclave.

En effet, de manière générale, la tolérance aux pannes au niveau système demande le respect des règles suivantes :
1. Éviter que des commandes erronées soient remises aux périphériques contrôlés.
2. Préserver la consistance du contexte entre le calculateur maître et le calculateur esclave pour éviter qu'une carence de coordination entre ces calculateurs conduise, au moment du basculement esclave-maitre, à une situation de discontinuité du flux de commandes dangereuse au niveau système. Il est à noter que cette discontinuité peut être temporelle (trou), mais aussi du contenu (une donnée de sortie qui change de valeur de façon accidentelle).

En effet, pour que le basculement du contrôle entre calculateurs n'ait pas d'impact sur les périphériques contrôlés, une continuité du flux de commandes doit être garantie.

Si le basculement du contrôle entre calculateurs occasionne une interruption temporaire de ce flux de commandes, cette interruption doit rester inférieure à un intervalle de sécurité pour qu'il n'y ait pas de conséquences au niveau système. De même, l'évolution des valeurs des données de sortie lors du basculement doit rester fonctionnelle.

La définition d'un intervalle de sécurité est propre à chaque système, à chaque fonctionnalité. Sa valeur est également dépendante des caractéristiques du réseau (taux de perte de messages, latence). En général, l'intervalle de sécurité est choisi à une valeur minimale correspondant à la durée d'un cycle d'exécution majorée de la latence introduite par le réseau.

La première règle est satisfaite par chaque calculateur de sécurité 11 et 12, puisqu'un tel calculateur génère uniquement des commandes en sécurité et qu'il assume automatiquement une condition restrictive de repli en cas de défaillance.

Pour respecter la seconde règle, deux conditions sont nécessaires :
i. Assurer, en sécurité, la cohérence entre les calculateurs de sécurité redondés.
ii. Assurer qu'un et un seul des calculateurs de sécurité soit le calculateur maître du système à chaque instant.

La première contrainte est respectée par le procédé 100, en particulier l'étape 250 de vérification de l'alignement des contextes, mais également de prise en compte des mêmes données d'entrée et des mêmes variables critiques du contexte pour l'exécution de l'application.

La seconde condition est liée à la détection de la défaillance du calculateur maître, à sa mise en sécurité et au basculement du calculateur esclave de la condition d'esclave à celle de maître, pour remplacer le calculateur maître défaillant.

L'exclusion du calculateur maître est une conséquence obligée de sa défaillance. En effet, en tant que calculateur de sécurité, il adopte une condition restrictive de repli en cas de défaillance.

De préférence, la seconde règle doit également pouvoir être respectée en cas d'un partitionnement du réseau de communication 8 qui entraînerait l'impossibilité de maintenir la communication entre les calculateurs maître et esclave 11 et 12 et par conséquent l'alignement de leurs contextes. Si, par exemple, suite à une panne grave du réseau, le calculateur maître se trouvait complètement isolé du calculateur esclave, ce dernier basculerait d'esclave à maître. Cette situation est contraire à la sécurité puisque chaque partition du réseau possèderait un calculateur maître différent, et que ces deux maîtres ne seraient pas capables de garder une cohérence mutuelle faute de communication entre eux.

Pour éviter ce risque, deux stratégies, non mutuellement exclusives, sont possibles, comme cela est illustré sur la figure 5.

La première stratégie consiste à organiser une concertation entre le premier calculateur 11 défaillant et le second calculateur esclave 12 souhaitant basculer d'esclave à maître. Selon cette première stratégie, le premier calculateur 11 défaillant délègue son rôle.

Pour cela, après avoir détecté sa propre défaillance à l'étape 170, le premier calculateur 11 se place, à l'étape 172, dans une condition restrictive de repli et envoi, à l'étape 174, un message de confirmation Conf de cette mise en sécurité vers le second calculateur 12.

Ce n'est que lorsque le second calculateur 12 reçoit ce message de confirmation, par exemple dans une étape 270 après l'étape 260, qu'il peut réaliser l'étape 300 de basculement d'esclave à maître.

Le réseau 8 doit cependant être disponible pour transmettre cette confirmation. Dans le cas contraire, le basculement du calculateur esclave n'aura pas lieu.

Une seconde stratégie consiste à prévoir un calculateur de sécurité supplémentaire 40 dans le système 10, disposé dans un site séparé des calculateurs maître et esclave et avec des moyens de communication indépendants du réseau 8. Ce calculateur 40 joue le rôle de calculateur témoin réalisant un acquittement extérieur et/ou un arbitrage afin d'assigner la fonction de maître, tout en déjouant une potentielle situation de double maître, notamment dans le cas de partitionnement du réseau 8.

Selon cette seconde stratégie, en cas de perte de communication entre les calculateurs maître et esclave résultant d'un partitionnement du réseau ou d'une défaillance complète du calculateur maître, le calculateur témoin sert à attester, de façon indépendante, la connectivité entre les calculateurs maître et esclave, ainsi que leur condition. En cas de partitionnement du réseau, un calculateur qui perd sa connectivité avec le calculateur témoin adopte une condition restrictive de repli.

Ainsi par exemple, après l'étape 260, à l'étape 280, le second calculateur 12 envoi une requête de consultation du calculateur témoin 40.

Si aucune réponse n'est reçue dans un délai prédéfini (étape 282) indiquant que le calculateur témoin 40 n'est pas joignable, le second calculateur 12 infère une situation d'isolement et adopte une condition de repli en sécurité (étape 284).

En revanche, si le second calculateur 12 conserve sa connectivité avec le calculateur témoin 40 et si le calculateur témoin 40 répond en indiquant l'absence d'autre calculateur maître dans la partition, ce ne sera que lors de la réception de cette réponse que le second calculateur 12 pourra réaliser l'étape 300.

Dans cette seconde stratégie, puisque la capacité à basculer d'esclave à maitre dépend de la disponibilité du calculateur témoin 40, cette fonction de témoin peut avantageusement être elle-même redondée. Dans ce cas, les calculateurs maitre et esclave peuvent voter les conditions attestées par chacun des calculateurs témoins accessibles.

Si le basculement d'esclave à maître (étape 300) intervient au cycle N+1, le second calculateur 12 réalise l'exécution de la seconde réplique 14 de l'application dans le second contexte 16 déterminé à l'issue du cycle N avec les secondes données d'entrée 18 collectées par le second calculateur 12 lors de l'étape 210 du cycle N. Puis les secondes données de sortie 20 calculées au cycle N+1 sont transmises par le second calculateur 12, qui agit maintenant comme maître, vers les périphériques 32.

Au niveau d'un périphérique 32, un transitoire de l'intervalle temporel entre deux commandes successives apparaît lors du basculement. En effet, la première commande provient du premier calculateur 11 avant qu'il ne soit défaillant et la seconde commande, qui suit la première commande, provient du second calculateur 12 devenu maitre. Lors du basculement, l'intervalle entre ces première et seconde commandes peut être de quelques cycles, mais ceci n'a pas de conséquence sur le système comme indiqué précédemment.

Il est à noter que dans le cas où un calculateur maître est redondé par plusieurs calculateurs esclaves, une coordination entre calculateurs esclaves doit être établie pour qu'un et seulement un parmi ceux-ci remplace le calculateur maître défaillant. Pour ce faire, il suffit d'établir à l'avance une hiérarchie entre calculateurs permettant de déterminer quel calculateur esclave doit basculer d'esclave à maître pour remplacer un calculateur maître défaillant. Par exemple, cette hiérarchie prend la forme d'une liste ordonnée des identifiants des calculateurs assurant la redondance d'une même fonctionnalité. Alors, le calculateur remplaçant le calculateur maître courant en cas de défaillance de ce dernier est le calculateur dont l'identifiant suit celui du calculateur maître courant dans la liste.

Par le procédé précédemment présenté, une cohérence entre les calculateurs maître et esclave est assurée, en remplacement de la synchronisation stricte de l'art antérieur.

Même si les cycles d'exécutions des répliques des applications sont décalés temporellement entre eux, le procédés permet de s'assurer que les sorties produites pour un même cycle d'exécution sont identiques.

Avantageusement, pour rendre le procédé résilient, notamment à la perte de paquets correspondant à une partie d'un message ou à une réception défectueuse de messages provenant des périphériques 31, le calculateur maître peut émettre un même message plusieurs fois, ou produire des trames de correction permettant au calculateur esclave de détecter et de compenser les erreurs ou pertes, par exemple, en requérant auprès du maître la retransmission de tout ou partie du message.

Il est à noter que, contrairement par exemple au système présenté dans le document EP 1 767 694 B1 qui comporte un dispositif de commande permettant à chaque instant d'arbitrer entre les deux calculateurs celui qui doit fonctionner en maître et celui qui soit fonctionner en esclave, le présent système ne comporte pas obligatoirement un tel dispositif supplémentaire, même si dans une variante de réalisation il est envisagé d'utiliser un calculateur témoin. Dans le système présenté ici, c'est le calculateur esclave qui décide de prendre la main, notamment lorsqu'il ne reçoit plus de messages de la part du calculateur maître. Le système est donc immunisé contre les défaillances d'un tel dispositif supplémentaire de commande.

L'homme du métier constatera que le système venant d'être présenté permet une redondance géographique à chaud de nature à garantir un niveau élevé de disponibilité de la fonctionnalité offerte par le système, sans pour autant nécessiter la synchronisation stricte des calculateurs de sécurité redondés.

Les mécanismes de coordination souple mis en œuvre entre les calculateurs de sécurité redondés autorisent la suppression de la liaison dédiée entre ces moyens informatiques.

Les calculateurs de sécurité redondés peuvent être physiquement à de grandes distances l'un de l'autre, permettant d'éviter les modes communs de défaillance. Par une telle redondance géographique, une plus grande disponibilité de la fonctionnalité fournie par le système est obtenue.

La redondance à chaud étant assurée au niveau système, toute application portée sur les calculateurs peut en bénéficier de façon transparente, sans besoin d'études spécifiques ni de certifications au niveau applicatif d'une stratégie particulière.

Compte-tenu de la latence introduite par un réseau de communication générique, le système présenté est particulièrement bien adapté au monde ferroviaire, en particulier aux fonctionnalités de contrôle du trafic des trains, notamment les fonctionnalités de signalisation.

L'efficacité de la redondance dépend des performances du réseau qui lie les calculateurs redondés. Si les caractéristiques du réseau se dégradent, l'exécution chez le(s) esclave(s) prendra du retard et, si le problème persiste, la cohérence maitre-esclave pourrait être perdue. Ainsi, on préfèrera l'utilisation d'un réseau dédié à la communication entre calculateurs de sécurité ou tout au moins d'un réseau permettant la réservation d'une bande passante adaptée afin d'assurer une qualité de service minimale aux communications entre maître et esclave.

## Revendications

1. Procédé (100) pour une redondance à chaud géographique entre un premier calculateur de sécurité (11) et un second calculateur de sécurité (12), les premier et second calculateurs de sécurité étant distants l'un de l'autre pour éviter des modes communs de défaillance, les premier et second calculateurs de sécurité étant connectés l'un à l'autre par un réseau de communication (8) générique dépourvu de liaison de synchronisation pour une synchronisation stricte entre le premier et le second calculateurs de sécurité, le premier calculateur de sécurité exécutant cycliquement une première réplique (13) d'une application et le second calculateur de sécurité, redondant le premier calculateur de sécurité, exécutant cycliquement une seconde réplique (14) de ladite application, le procédé étant **caractérisé par** les étapes consistant en, en fonctionnement normal alors que le premier calculateur de sécurité fonctionne en tant que calculateur maître et que le second calculateur de sécurité fonctionne en tant que calculateur esclave :
- a) la transmission (120) par le premier calculateur de sécurité (11) vers le second calculateur de sécurité (12) d'un message (M_{N}) comportant des premières données d'entrée (17) pour un n^{ième} cycle et tout ou partie d'un premier contexte d'exécution (15) de l'application pour le n^{ième} cycle ;
- b) l'exécution (130), au cours du nième cycle, de la première réplique (13) de l'application sur le premier calculateur de sécurité (11) et mise à jour du premier contexte d'exécution (15) de l'application à la fin du n^{ième} cycle ;
- c) la transmission (140) par le premier calculateur de sécurité (11) vers le second calculateur de sécurité (12) d'une première grandeur de sortie (S_{N}) correspondant à tout ou partie du premier contexte d'exécution (15) à la fin du n^{ième} cycle ;
- d) la réception (220) par le second calculateur de sécurité (12) du message (M_{N}) et la récupération des premières données d'entrée du n^{ième} cycle et de tout ou partie du premier contexte d'exécution du n^{ième} cycle contenu dans le message en tant que secondes données d'entrée (18) et second contexte d'exécution (16) pour le n^{ième} cycle sur le second calculateur de sécurité (12);
- e) l'exécution (230), au cours du n^{ième} cycle, de la seconde réplique (14) de l'application sur le second calculateur de sécurité (12) dans le second contexte d'exécution (16) pour le n^{ième} cycle, sur les secondes données d'entrée (18) du n^{ième} cycle, et mise à jour du second contexte d'exécution (16) à la fin du n^{ième} cycle ;
- f) la vérification (250), de préférence par le second calculateur de sécurité, de la cohérence entre les premier et second calculateurs de sécurité en comparant une seconde grandeur de sortie (S'_{N}) correspondant à tout ou partie du second contexte d'exécution (16) à la fin du n^{ième} cycle sur le second calculateur de sécurité (12) avec la première grandeur de sortie (S_{N}) à la fin du n^{ième} cycle reçue du premier calculateur de sécurité (11).

2. Procédé selon la revendication 1, comportant, en cas de différence entre les première et seconde grandeurs de sortie, une étape d'éducation (400) pour rétablir une cohérence entre le second calculateur de sécurité (12) et le premier calculateur de sécurité (11), ladite étape d'éducation consistant à réaliser (420) une image (I_{N}) du premier contexte d'exécution (15) à la fin du n^{ième} cycle sur le premier calculateur de sécurité (11), à transmettre (430) l'image vers le second calculateur de sécurité (12), à initialiser le second contexte d'exécution (16) sur le second calculateur de sécurité (12) avec l'image reçue, et à exécuter la seconde réplique (14) de l'application sur le second calculateur de sécurité (12) au cours du cycle suivant le n^{ième} cycle.

3. Procédé selon la revendications 2, dans lequel, au cours de l'étape d'éducation (400), le second calculateur de sécurité (12) est maintenu dans une étape de quarantaine (460) durant un nombre de cycle prédéterminé afin de vérifier la cohérence entre les premier et second calculateurs de sécurité en mettant en œuvre les étapes a) à f) pour chacun des cycles de l'étape de quarantaine, et, en cas de vérification positive, de rétablir la redondance (470) entre les premier et second calculateurs de sécurité.

4. Procédé selon l'une quelconque des revendications 1 à 3, dans lequel les première et seconde grandeurs de sortie (S_{N}, S'_{N}) à la fin du n^{ième} cycle correspondent à une signature du contexte d'exécution correspondant à la fin du n^{ième} cycle, un algorithme de signature étant choisi en fonction d'un niveau de sécurité de fonctionnement requis.

5. Procédé selon l'une quelconque des revendications 1 à 4, dans lequel le second calculateur de sécurité (12) réalise une étape (300) de basculement d'esclave à maître lorsqu'il ne reçoit plus de message de la part du premier calculateur de sécurité (11) pendant une durée prédéterminée.

6. Procédé selon l'une quelconque des revendications 1 à 5, dans lequel, lorsque le premier calculateur de sécurité (11) détecte (170) une défaillance, il adopte (172) un état de repli sécuritaire et transmet (174) une confirmation de l'état de repli adopté au second calculateur de sécurité (12), le second calculateur de sécurité initiant une étape (300) de basculement d'esclave à maître après avoir reçu ladite confirmation.

7. Procédé selon l'une quelconque des revendications 1 à 6, comportant une étape de maintien de la communication mettant en œuvre un calculateur de sécurité supplémentaire jouant un rôle de calculateur témoin (40), connecté d'une part au premier calculateur de sécurité (11) et d'autre part au second calculateur de sécurité (12), le second calculateur de sécurité (12) initiant une étape (300) de basculement d'esclave à maître suite à l'interruption de la communication avec le premier calculateur de sécurité (11), après avoir interrogé le calculateur supplémentaire (40) et avoir reçu de ce dernier une confirmation que le premier calculateur de sécurité (11) ne répond pas.

8. Procédé selon l'une quelconque des revendications précédentes, dans lequel en cas de différence entre les première et seconde grandeurs de sortie détectée pour la première fois depuis une durée supérieure à un seuil prédéterminé, le seuil prédéterminé étant de préférence supérieur à la durée de deux cycles d'exécution, est prévue une étape de réexécution d'un cycle d'exécution.

9. Procédé selon l'une quelconque des revendications précédentes, dans lequel la transmission (120) par le premier calculateur de sécurité (11) vers le second calculateur de sécurité (12) d'un message (M_{N}) comportant des premières données d'entrée (17) pour un n^{ième} cycle et tout ou partie d'un premier contexte d'exécution (15) de l'application pour le n^{ième} cycle et/ou la transmission (140) par le premier calculateur de sécurité (11) vers le second calculateur de sécurité (12) d'une première grandeur de sortie (S_{N}) correspondant à tout ou partie du premier contexte d'exécution (15) à la fin du n^{ième} cycle, comporte l'émission par le premier calculateur de sécurité (11) de codes de correction, lesdits codes de correction permettant au second calculateur de sécurité (12) de reconstituer des trames égarées ou supprimées par le réseau de communication (8).

10. Système (10) pour une redondance à chaud géographique comportant un premier calculateur de sécurité (11) et un second calculateur de sécurité (12), les premier et second calculateurs de sécurité étant distants l'un de l'autre pour éviter des modes communs de défaillance, les premier et seconds calculateurs de sécurité étant connectés l'un à l'autre par un réseau de communication (8) générique dépourvu de liaison de synchronisation pour une synchronisation stricte entre le premier et le second calculateurs de sécurité, le premier calculateur de sécurité exécutant cycliquement une première réplique (13) d'une application et le second calculateur de sécurité, redondant le premier calculateur de sécurité, exécutant cycliquement une seconde réplique (14) de ladite application, le système (10) étant configuré pour mettre en œuvre un procédé conforme à l'une quelconque des revendications 1 à 9.

11. Système (10) selon la revendication 10, dans lequel le réseau de communication (8) est un réseau étendu mettant en œuvre un protocole ETHERNET.

12. Système (10) selon la revendication 10 ou la revendication 11, dans lequel le second calculateur de sécurité (12) est disposé à distance du premier calculateur de sécurité (11) de manière à éviter les modes communs de défaillance.

13. Système (10) selon l'une quelconque des revendications 10 à 12, comportant en outre un calculateur de sécurité supplémentaire jouant un rôle de calculateur témoin (40) connecté d'une part au premier calculateur de sécurité (11) et d'autre part au second calculateur de sécurité (12).

14. Système (10) selon l'une quelconque des revendications 10 à 13, dans lequel les premier et second calculateurs de sécurité (11, 12) exécutent un algorithme de sécurité permettant de générer, à partir d'un contexte d'exécution de l'application à la fin d'un n^{ième} cycle, une signature en tant que grandeur de sortie pour la vérification de la cohérence entre les premier et second calculateurs de sécurité (11, 12).

## Patentansprüche

1. Verfahren (100) für eine geographische heiße Redundanz zwischen einem ersten Sicherheitsrechner (11) und einem zweiten Sicherheitsrechner (12), wobei der erste und der zweite Sicherheitsrechner voneinander entfernt sind, um gemeinsame Fehlermodi zu vermeiden, wobei der erste und der zweite Sicherheitsrechner durch ein generisches Kommunikationsnetzwerk (8) ohne eine Synchronisationsverbindung für eine strenge Synchronisation zwischen dem ersten und dem zweiten Sicherheitsrechner miteinander verbunden sind, wobei der erste Sicherheitsrechner zyklisch eine erste Replik (13) einer Anwendung ausführt und der zweite Sicherheitsrechner, der zu dem ersten Sicherheitsrechner redundant ist, zyklisch eine zweite Replik (14) der genannten Anwendung ausführt, wobei das Verfahren durch die Schritte gekennzeichnet ist, die im Normalbetrieb, wenn der erste Sicherheitsrechner als Master-Rechner funktioniert und der zweite Sicherheitsrechner als Slave-Rechner funktioniert, aus Folgenden bestehen:
- a) der Übertragung (120), durch den ersten Sicherheitsrechner (11) an den zweiten Sicherheitsrechner (12), einer Nachricht (M_{N}), umfassend erste Eingangsdaten (17) für einen n^{ten} Zyklus und den gesamten oder einen Teil eines ersten Ausführungskontextes (15) der Anwendung für den n^{ten} Zyklus;
- b) der Ausführung (130), während des n-ten Zyklus, der ersten Replik (13) der Anwendung auf dem ersten Sicherheitsrechner (11) und Aktualisierung des ersten Ausführungskontextes (15) der Anwendung am Ende des n^{ten} Zyklus;
- c) der Übertragung (140), durch den ersten Sicherheitsrechner (11) an den zweiten Sicherheitsrechner (12), einer ersten Ausgangsvariablen (SN), die dem gesamten oder einem Teil des ersten Ausführungskontextes (15) entspricht, am Ende des n^{ten} Zyklus;
- d) dem Empfang (220), durch den zweiten Sicherheitsrechner (12), der Nachricht (M_{N}) und Abrufen der ersten Eingangsdaten des n^{ten} Zyklus und des gesamten oder eines Teils des ersten Ausführungskontextes des n^{ten} Zyklus, der in der Nachricht als zweite Eingangsdaten (18) und zweiter Ausführungskontext (16) für den n^{ten} Zyklus auf dem zweiten Sicherheitsrechner (12) enthalten ist;
- e) der Ausführung (230), während des n^{ten} Zyklus, der zweiten Replik (14) der Anwendung auf dem zweiten Sicherheitsrechner (12) in dem zweiten Ausführungskontext (16) für den n^{ten} Zyklus, über die zweiten Eingangsdaten (18) des n^{ten} Zyklus und Aktualisierung des zweiten Ausführungskontextes (16) am Ende des n^{ten} Zyklus;
- f) Überprüfung (250), vorzugsweise durch den zweiten Sicherheitsrechner, der Kohärenz zwischen dem ersten und dem zweiten Sicherheitsrechner durch Vergleichen einer zweiten Ausgangsgröße (S'N), die dem gesamten oder einem Teil des zweiten Ausführungskontexts (16) am Ende des n^{ten} Zyklus auf dem zweiten Sicherheitsrechner (12) entspricht, mit der ersten Ausgangsgröße (SN) am Ende des n^{ten} Zyklus, die von dem ersten Sicherheitsrechner (11) empfangen wurde.

2. Verfahren nach Anspruch 1, umfassend, im Fall einer Differenz zwischen der ersten und der zweiten Ausgangsgröße, einen Lernschritt (400) zum Wiederherstellen einer Kohärenz zwischen dem zweiten Sicherheitsrechner (12) und dem ersten Sicherheitsrechner (11), wobei der Lernschritt aus einem Erstellen (420) eines Bilds (IN) des ersten Ausführungskontextes (15) am Ende des n^{ten} Zyklus auf dem ersten Sicherheitsrechner (11), einem Übertragen (430) des Bilds an den zweiten Sicherheitsrechner (12), einem Initialisieren des zweiten Ausführungskontextes (16) auf dem zweiten Sicherheitsrechner (12) mit dem empfangenen Bild und einem Ausführen der zweiten Replik (14) der Anwendung auf dem zweiten Sicherheitsrechner (12) während des Zyklus, der auf den n^{ten} Zyklus folgt, besteht.

3. Verfahren nach Anspruch 2, wobei, während des Lernschritts (400), der zweite Sicherheitsrechner (12) für eine vorbestimmte Zykluszahl in einem Quarantäneschritt (460) gehalten wird, um die Kohärenz zwischen dem ersten und dem zweiten Sicherheitsrechner zu überprüfen, indem die Schritte a) bis f) für jeden der Zyklen des Quarantäneschritts durchgeführt werden, und um im Falle einer positiven Überprüfung die Redundanz (470) zwischen dem ersten und dem zweiten Sicherheitsrechner wiederherzustellen.

4. Verfahren nach einem der Ansprüche 1 bis 3, wobei die erste und die zweite Ausgangsgröße (S_{N}, S'_{N}) am Ende des n^{ten} Zyklus einer Signatur des Ausführungskontextes entsprechen, die dem Ende des n^{ten} Zyklus entspricht, wobei ein Signaturalgorithmus abhängig von einem erforderlichen Grad an Betriebssicherheit ausgewählt wird.

5. Verfahren nach einem der Ansprüche 1 bis 4, wobei der zweite Sicherheitsrechner (12) einen Schritt (300) einer Umschaltung von Slave auf Master ausführt, wenn er über eine vorbestimmte Dauer keine Nachricht mehr von dem ersten Sicherheitsrechner (11) empfängt.

6. Verfahren nach einem der Ansprüche 1 bis 5, wobei, wenn der erste Sicherheitsrechner (11) einen Fehler erkennt (170), er einen sicheren Ausweichzustand einnimmt (172) und eine Bestätigung des angenommenen Ausweichzustands an den zweiten Sicherheitsrechner (12) übermittelt (174), wobei der zweite Sicherheitsrechner nach Erhalt dieser Bestätigung einen Schritt (300) einer Umschaltung von Slave auf Master einleitet.

7. Verfahren nach einem der Ansprüche 1 bis 6, umfassend einen Schritt zur Aufrechterhaltung der Kommunikation durch Verwendung eines zusätzlichen Sicherheitsrechners, der als Steuerrechner (40) fungiert und einerseits mit dem ersten Sicherheitsrechner (11) und andererseits mit dem zweiten Sicherheitsrechner (12) verbunden ist, wobei der zweite Sicherheitsrechner (12) nach der Unterbrechung der Kommunikation mit dem ersten Sicherheitsrechner (11) einen Schritt (300) einer Umschaltung von Slave auf Master einleitet, nachdem er den zusätzlichen Rechner (40) abgefragt und von diesem die Bestätigung erhalten hat, dass der erste Sicherheitsrechner (11) nicht antwortet.

8. Verfahren nach einem der vorherigen Ansprüche, wobei für den Fall, dass eine Differenz zwischen der ersten und der zweiten Ausgangsgröße zum ersten Mal für eine Dauer festgestellt wird, die größer ist als ein vorbestimmter Schwellenwert, wobei der vorbestimmte Schwellenwert vorzugsweise größer ist als die Dauer von zwei Ausführungszyklen, ein Schritt einer erneuten Ausführung eines Ausführungszyklus vorgesehen ist.

9. Verfahren nach einem der vorherigen Ansprüche, wobei die Übertragung (120), durch den ersten Sicherheitsrechner (11) an den zweiten Sicherheitsrechner (12), einer Nachricht (M_{N}), umfassend erste Eingangsdaten (17) für einen n^{ten} Zyklus und den gesamten oder einen Teil eines ersten Ausführungskontextes (15) der Anwendung für den n^{ten} Zyklus und/oder die Übertragung (140), durch den ersten Sicherheitsrechner (11) an den zweiten Sicherheitsrechner (12), einer ersten Ausgangsvariablen (SN), die dem gesamten oder einem Teil des ersten Ausführungskontextes (15) entspricht, am Ende des n^{ten} Zyklus, wobei die Übertragung von Korrekturcodes durch den ersten Sicherheitsrechner (11) umfasst, wobei die Korrekturcodes es dem zweiten Sicherheitsrechner (12) ermöglichen, Frames wiederherzustellen, die von dem Kommunikationsnetz (8) verlegt oder gelöscht wurden.

10. System (10) für eine geographische heiße Redundanz, umfassend einen ersten Sicherheitsrechner (11) und einen zweiten Sicherheitsrechner (12), wobei der erste und der zweite Sicherheitsrechner voneinander entfernt sind, um gemeinsame Fehlermodi zu vermeiden, wobei der erste und der zweite Sicherheitsrechner durch ein generisches Kommunikationsnetzwerk (8) ohne eine Synchronisationsverbindung für eine strenge Synchronisation zwischen dem ersten und dem zweiten Sicherheitsrechner miteinander verbunden sind, wobei der erste Sicherheitsrechner zyklisch eine erste Replik (13) einer Anwendung ausführt und der zweite Sicherheitsrechner, der zu dem ersten Sicherheitsrechner redundant ist, zyklisch eine zweite Replik (14) der genannten Anwendung ausführt, wobei das Verfahren durch die Schritte gekennzeichnet ist, die im Normalbetrieb, wenn der erste Sicherheitsrechner als Master-Rechner funktioniert und der zweite Sicherheitsrechner als Slave-Rechner funktioniert, wobei das System (10) konfiguriert ist, um ein Verfahren nach einem der Ansprüche 1 bis 9 zu implementieren.

11. System (10) nach Anspruch 10, wobei das Kommunikationsnetz (8) ein Weitverkehrsnetz ist, das ein ETHERNET-Protokoll implementiert.

12. System (10) nach Anspruch 10 oder Anspruch 11, wobei der zweite Sicherheitsrechner (12) von dem ersten Sicherheitsrechner (11) entfernt angeordnet ist, um gemeinsame Fehlermodi zu vermeiden.

13. System (10) nach einem der Ansprüche 10 bis 12, ferner umfassend einen zusätzlichen Sicherheitsrechner, der als Steuerrechner (40) fungiert und einerseits mit dem ersten Sicherheitsrechner (11) und andererseits mit dem zweiten Sicherheitsrechner (12) verbunden ist.

14. System (10) nach einem der Ansprüche 10 bis 13, wobei der erste und der zweite Sicherheitsrechner (11, 12) einen Sicherheitsalgorithmus ausführen, um anhand eines Ausführungskontextes der Anwendung am Ende eines n^{ten} Zyklus eine Signatur als Ausgangsgröße zur Überprüfung der Kohärenz zwischen dem ersten und dem zweiten Sicherheitsrechner (11, 12) zu erzeugen.

## Claims

1. A method (100) for a geographical hot redundancy between a first safety computer (11) and a second safety computer (12), the first and second safety computers being remote from each other to avoid failure common modes, the first and second safety computers being connected to each other by a generic communication network (8) without a synchronisation link allowing a strict synchronisation between the first and the second safety computers, the first safety computer cyclically executing a first replica (13) of an application and the second safety computer, providing a redundancy for the first safety computer, cyclically executing a second replica (14) of said application, the method being **characterized by** the steps consisting in, in normal operation, while the first safety computer operates as a master computer and the second safety computer operates as a slave computer,:
- a) a transmission (120) by the first safety computer (11) to the second safety computer (12) of a message (M_{N}) comprising first input data items (17) for an n^{th} cycle and all or part of a first execution context (15) of the application for the n^{th} cycle;
- b) an execution (130), during the n^{th} cycle, of the first replica (13) of the application on the first safety computer (11) and updating of the first execution context (15) of the application at the end of the n^{th} cycle;
- c) a transmission (140) by the first safety computer (11) to the second safety computer (12) of a first output quantity (S_{N}) corresponding to all or part of the first execution context (15) at the end of the n^{th} cycle;
- d) a reception (220) by the second safety computer (12) of the message (M_{N}) and a recovery of the first input data items for the n^{th} cycle and of all or part of the first execution context for the n^{th} cycle contained in the message as second input data items (18) and a second execution context (16) for the n^{th} cycle on the second safety computer (12);
- e) an execution (230), during the n^{th} cycle, of the second replica (14) of the application on the second safety computer (12) in the second execution context (16) for the n^{th} cycle, on the second input data items (18) of the n^{th} cycle, and an update of the second execution context (16) at the end of the n^{th} cycle;
- f) a check (250) and verification, preferably by the second safety computer, of the consistency between the first and second safety computers by comparing a second output quantity (S'_{N}) corresponding to all or part of the second execution context (16) at the end of the n^{th} cycle on the second safety computer (12) with a first output quantity (S_{N}) at the end of the n^{th} cycle received from the first safety computer (11).

2. The method according to claim 1, comprising, in the event of a difference between the first and second output quantities, a training step (400) in order to restore a consistency between the second safety computer (12) and the first safety computer (11), said training step consisting in producing (420) an image (I_{N}) of the first execution context (15) at the end of the n^{th} cycle on the first safety computer (11); transmitting (430) the image to the second safety computer (12); initializing a second execution context (16) on the second safety computer (12) with the image received; and executing the second replica (14) of the application on the second safety computer (12) during a cycle that follows the n^{th} cycle.

3. The method according to claim 2, wherein, during the training step (400), the second safety computer (12) is maintained in a quarantine step (460) during a predetermined number of cycles in order to check and verify the consistency between the first and second safety computers by effectively implementing the steps a) to f) for each of the cycles of the quarantine step, and, in the event of a positive verification, to restore the redundancy between the first and second safety computers.

4. The method according to any one of claims 1 to 3, wherein the first and second output quantities (S_{N}, S'_{N}) at the end of the n^{th} cycle correspond to a signature of the execution context at the end of the n^{th} cycle, a signature algorithm being chosen in accordance with a required level of operational security.

5. The method according to any one of claims 1 to 4, wherein the second safety computer (12) performs a step (300) of switching from slave to master when the second computer no longer receives a message from the first safety computer (11) for a predetermined period of time.

6. The method according to any one of claims 1 to 5, wherein, when the first safety computer (11) detects (170) a failure, it adopts (172) a safe fallback state and transmits (174) a confirmation of the safe fallback state adopted to the second safety computer (12), with the second safety computer initiating a step (300) of switching from slave to master after having received the confirmation.

7. The method according to any one of claims 1 to 6, including a step of maintaining the communication by operationally deploying an additional safety computer that fulfills the role of a control computer (40), connected on the one hand to the first safety computer (11) and on the other hand to the second safety computer (12), with the second safety computer (12) initiating a step (300) of switching from slave to master following an interruption of the communication with the first safety computer (11), after having interrogated the additional safety computer (40) and having received from the latter a confirmation that the first safety computer (11) is not responding.

8. The method according to any one of the preceding claims , wherein, in case of a difference between the first and second output quantities being detected for the first time over a time period greater than a predetermined threshold value, the predetermined threshold value preferably being greater than a duration of two execution cycles, a re-execution step for re-executing an execution cycle is provided for.

9. The method according to any one of the preceding claims, wherein the transmission (120) by the first safety computer (11) to the second safety computer (12) of a message (M_{N}) comprising first input data items (17) for an n^{th} cycle and all or part of a first execution context (15) of the application for the n^{th} cycle and/or the transmission (140) by the first safety computer (11) to the second safety computer (12) of a first output quantity (S_{N}) corresponding to all or part of the first execution context (15) at the end of the n^{th} cycle, includes a sending by the first safety computer (11) of correction codes, said correction codes making it possible for the second safety computer (12) to reconstruct the frames lost or deleted by the communication network 8).

10. A system (10) for geographical hot redundancy comprising a first safety computer (11) and a second safety computer (12), the first and second safety computers being remote from each other to avoid failure common modes, the first and second safety computers being connected to each other by a generic communication network (8) without a synchronisation link allowing a strict synchronisation between the first and the second safety computers, the first safety computer cyclically executing a first replica (13) of an application and the second safety computer, providing redundancy for the first safety computer, cyclically executing a second replica (14) of the said application, the system (10) being configured so as to operationally implement a method according to any one of claims 1 to 9.

11. The system (10) according to claim 10, in which the communication network (8) is a wide area network operationally implementing an ETHERNET protocol.

12. The system (10) according to claim 10 or claim 11, wherein the second safety computer (12) is placed at a distance from the first safety computer (11) in a manner so as to avoid failure common modes.

13. The system (10) according to any one of claims 10 to 12, further comprising an additional safety computer that fulfills the role of a control computer (40) connected on one hand to the first safety computer (11) and on the other hand to the second safety computer (12).

14. The system (10) according to any one of claims 10 to 13, wherein the first and second safety computers (11, 12) execute a safety algorithm making it possible to generate, from an execution context of the application at the end of an n^{th} cycle, a signature as an output quantity for the verification of the consistency between the first and second safety computers (11, 12).
